# EUROPEAN PATENT SPECIFICATION

(11) **EP 3 880 448 B1**
(45) Date of publication and mention of the grant of the patent: **03.04.2024**
(21) Application number: 18803620.6
(22) Date of filing: 12.11.2018
(51) Int. Cl.: B29C 70/54, B29C 31/00, B29C 49/42, D04H 3/018, D04H 3/07

(54) **HANDLING OF PRE-FORMED FABRICS**
HANDHABUNG VON FERTIGSTOFFEN
MANIPULATION DE TISSUS PRE-FORMÉS

(43) Date of publication of application: 22.09.2021
(73) Proprietor: Coexpair S.A., 5020 Namur (BE)
(72) Inventor: BERTIN, André, 5020 Vedrin (BE); SEVERIN, Pierre, 6000 Charleroi (BE); CASSART, Florian, 5020 Vedrin (BE)
(74) Representative: Gevers Patents
(86) International application number: PCT/EP2018/080962
(87) International publication number: WO 2020/098909

(56) References cited:
- EP-A1- 2 774 905
- WO-A1-2014/166493
- WO-A1-2014/166493
- US-A1- 2002 192 327
- US-A1- 2015 013 160
- US-A1- 2015 251 362
- US-B2- 9 409 356

## Description

### Field of the invention

The present invention relates to the handling of pre-formed fabrics, and, and is more particularly, although not exclusively, concerned with the handling of pre-formed fabrics used for the formation of a generally conical shape.

### Background of the invention

It is known to use pre-formed woven fabrics in the formation of composite components. The pre-formed woven fabric, in each case, forms one or more layers around which an epoxy resin or the like is injected to form the composite component. In many cases, the shaped pre-formed woven fabric is made in one location, for example, by one manufacturer, and needs to transported to another location where it is used for the formation of the composite component.

The handling of unshaped pre-formed woven fabrics is relatively straightforward as flattening out or change of shape of the woven fabric tends not to have a substantial impact on the final composite component. However, for shaped pre-formed woven fabrics, it is important to retain the pre-formed shape during handling and transportation so that the shaped pre-formed woven fabric can be placed in a mould without having to re-shape it. Moreover, as more than one pre-formed woven fabric layer tends to be used, each woven fabric layer needs to retain its pre-formed shape and its fibre orientation within a stack of such fabric layers.

Document WO 2014/166493 A1 discloses a method of making a root of wind turbine blade. In particular, it relates to a fibre preform for laying on the curved surface of a wind turbine blade mould. Document EP 2 774 905 A1 relates to woven fabric comprising ceramic fibres provided as a two-dimensional sheet aligned with an undulating mould member. Document US 2015/251362 A1 discloses a method and a mold for manufacturing a composite component for a wind turbine, wherein fiber material may be provided in the form of woven or knitted mats.

As shaped pre-formed woven fabrics tend to be complex with weaves which are specifically designed to provide pre-defined structures in composite components, it is important that they are handled and transported with little or no deformation prior to being placed in the mould.

The handling and transportation of complex shaped pre-formed fabrics is therefore a challenge, especially where the orientation of the fibres within the woven fabric needs to maintain a specific relationship with respect to one another.

### Summary of the invention

It is therefore an object of the present invention to provide a system for handling and transporting complex shaped pre-formed fabrics.

In accordance with one aspect of the present invention, there is provided a support for at least one pre-formed woven fabric layer for use in the formation of a composite component, the support comprising:- a shaped portion configured to match the configuration of the at least one pre-formed woven fabric layer, the shaped portion having first and second longitudinally extending edges and first and second transversely extending edges configured to be substantially perpendicular to the first and second longitudinally extending edges; the shaped portion being further configured to align longitudinally extending fibres and transversely extending fibres of each pre-formed woven fabric layer in a predetermined orientation.

By having such a support, the pre-formed shape of the woven fabric layer, or a stack of such layers, together with the orientation of the fibres within each pre-formed woven fabric layer, is maintained during handling, that is, during formation of the stack, as well as during storage and transportation.

The shaped portion comprises a plurality of peaks extending between the first and second longitudinal edges.

By having such peaks, undulations in the pre-formed woven fabric layers positioned on the support can be maintained during handling operations.

Each of the plurality of peaks has a peak profile comprising a varying amplitude which extends between the first and second longitudinal edges.

In this way, different amplitudes at the edges of the pre-formed woven fabric can be maintained as well as any change in amplitude between the edges of the pre-formed woven fabric.

It is preferred that each peak has the same peak profile. However, this is dependent on the particular configuration of the final composite component and may not be essential.

The shaped portion further comprises a plurality of troughs extending between the first and second longitudinally extending edges, each trough being located between adjacent peaks.

This provides a substantially sinusoidal pattern to the surface and provides a good support for the undulating surface of the pre-formed woven fabric.

In an embodiment, at least one retaining portion may be configured for aligning the at least one woven fabric layer with respect to the shaped portion.

This provides accurate alignment for placing one or more pre-formed woven fabric layers onto the support.

Each retaining portion may comprise at least one mounting member.

In this way, the mounting members provide more accurate alignment of the pre-formed woven fabric layers.

In an embodiment, the mounting members are located at respective ends of each peak.

This ensures that the woven fabric layer is aligned at the peaks where it is important to retain the shape for forming the conical composite component.

In an example, the at least one retaining portion is configured to define at least one cutting zone.

This has the advantage of providing a zone for cutting or trimming of either individual pre-formed woven fabric layers or a stack formed of such layers. This enables the layers or stack to be trimmed prior to being transferred to the mould.

A clamping member may be provided which is configured to be aligned with the peak profile of each peak and to be attached to the shaped surface.

In this way, the pre-formed fabric layer may be retained in position at its most critical point so that the undulations are maintained.

In an example, the clamping member may include attachment portions configured to engage with respective portions of each retaining member.

This effectively fixes the woven fabric layer, or stack of such layers, in position with respect to the support.

The clamping member may further comprise a central portion connecting the attachment portions to one another. The central portion is configured to match substantially the peak profile of a peak over which the clamping member is to be positioned.

By having the same peak profile as the peak over which the clamping member is to be positioned, this ensures that the pre-formed woven fabric layers are maintained in the correct orientation during handling, in particular, during transfer to a mould.

The clamping member may be configured for being located in a mould to support the at least one pre-formed woven fabric layer therein.

This ensures that the at least one pre-formed woven fabric layer or a stack of such layers is kept in the correct orientation during the moulding process.

Each retaining member may comprise a plurality of mounting elements aligned with each peak, the attachment portions being configured to be removably attached to the mounting elements.

By having the attachment portions of the clamping member configured to be removably attached to the mounting elements, it is relatively simple to connect and to disconnect the clamping member from the support.

In an example, the shaped portion comprises a first or upper surface of a table. This has the advantage that the stacked woven fabric layers can easily be transferred from one location to another.

In another example, the shaped portion comprises a frame having a first surface configured to support the at least one pre-formed woven fabric, and, a complementary second surface. Whilst the complementary surface allows for the stacking of the frames one on top of the other, the frame can be reduced in thickness saving both material and costs.

In an example, the frame comprises a wire framework. The frame may further comprise a continuous surface formed on a first surface of the wire framework to define the first surface of the frame.

By having a wire framework, a light structure is provided which, depending on the framework itself, may provide a continuous surface on its first surface or may have a continuous surface formed thereon of a different material.

In accordance with another aspect of the present invention, there is provided a method of handling a plurality of pre-formed woven fabric layers for use in the formation of a composite component, the method comprising:-stacking each pre-formed woven fabric layer on a support according to claim 1; and storing the stacked pre-form woven fabric layers on the support.

This provides a solution to the disadvantages as described above.

The method further comprises the step of transporting the stacked pre-formed woven fabric layers on the support.

According to an example not covered by the claims, the method may further comprise the step of clamping the stacked pre-formed woven fabric layers to the support.

This has the advantage of ensuring that the pre-formed fabric layers are effectively fixed to the support for handling procedures, such as, storage and transportation.

According to an example not covered by the claims, the method may further comprise the step of transferring the clamped stacked pre-formed woven fabric layers into a mould for formation of the composite component.

The step of stacking each pre-formed woven fabric layer on the support includes aligning longitudinally extending fibres to be substantially perpendicular to transversely extending fibres in one pre-formed woven fabric layer in a predetermined orientation with respect to another pre-formed woven fabric layer.

The step of stacking each pre-formed woven fabric layer on the support may further comprise aligning fibres in each pre-formed woven fabric layer to be at predefined angles with respect to one of: the longitudinally extending edges and the transversely extending edges of the support.

This provides the possibility of strengthening the composite component by providing alignment of the fibres in more orientations.

In an embodiment, the step of stacking the at least one pre-formed woven fabric layer on the support further comprises stacking a plurality of pre-formed woven fabric layers with fibres of at least one woven fabric layer being at a different predefined angle to another pre-formed woven fabric layer.

By stacking the pre-formed woven fabric layers at different angles, it is possible to strengthen the composite component by providing more orientations for the fibres in the layer.

The predefined angles may comprise one of: 0º, 30º, 45º, 60º and 90º.

In accordance with a further aspect of the present invention, there is provided a method for making a non-woven pre-form for use in the formation of a composite component using a support according to claim 1, the method comprising:-
a) laying first plurality of fibres on a support to form a first non-woven fibre layer;
b) laying a second plurality of fibres on the support over the first non-woven fibre layer to form a second non-woven fibre layer; and
c) repeating step b) to form at least one further non-woven fibre layer on the support over a previously formed non-woven fibre layer;
wherein each fibre is laid at an angle with respect to the support.

The angle with respect to the support may comprise one of: 0°, 30º, 45º, 60º and 90º.

In one embodiment, fibres in each non-woven fibre layer are configured to be oriented at the same angle with respect to the support. In another embodiment, fibres in each non-woven fibre layer are configured to be oriented at different angles with respect to the support.

### Brief description of the drawings

For a better understanding of the present invention, reference will now be made, by way of example, to the accompanying drawings in which:-
Figure 1 is a schematic illustration of a pre-formed woven fabric designed to provide a conical shape;
Figures 2a and 2b illustrate respective perpective and plan views of a pre-formed woven fabric showing the orientation of the fibres within the fabric;
Figure 3 is a schematic illustration of a perspective view of one embodiment of an undulated table in accordance with the present invention;
Figure 4 is a schematic illustration of a transverse side or edge end view of the undulated table of Figure 3;
Figure 5 is a top view of the undulated table of Figure 3;
Figure 6 is a schematic illustration of a longitudinal side or edge view of the undulated table of Figure 3;
Figure 7 is a schematic illustration of a perspective view of a second embodiment of an undulated table in accordance with the present invention;
Figure 8 is an enlarged view of a clamping member to be used with the undulated table of Figure 7;
Figure 9 illustrates the positioning of the clamping members within a mould;
Figure 10 illustrates is a schematic illustration of a perspective view of a third embodiment of an undulated table in accordance with the present invention;
Figure 11 is similar to Figure 3 but illustrating possible orientations of fibres over the table as a pre-formed woven fabric layer or a non-woven fibre layer is constructed; and
Figures 12a and 12b illustrate respective side and perspective views of a moulded component comprising a plurality of pre-formed woven fabric layers and illustrating fibre orientation within the component.

### Description of the invention

The present invention will be described with respect to particular embodiments and with reference to certain drawings but the invention is not limited thereto. The drawings described are only schematic and are nonlimiting. In the drawings, the size of some of the elements may be exaggerated and not drawn on scale for illustrative purposes.

The present invention will be described with respect to a pre-formed woven carbon fabric shaped for forming a shaped composite component, for example, a conical shell segment or the like, although the present invention is equally applicable to any pre-formed woven carbon fabric or the like for any other composite shape where it is important to retain the pre-formed shape during handling, for example, during stacking of individual pre-formed woven fabric layers, as well as during storage and transportation of the stack.

The pre-formed woven carbon fabric comprises fibres which are woven with warp and weft components as is well known. However, in order to provide strength to the shaped composite component, the warp and the weft components of the pre-formed woven fabric need to be maintained at particular orientations to one another, for example, perpendicular to one another, in the pre-formed shape, during storage, transportation and when in the mould. The warp and weft components are effectively the longitudinal and transverse components of the woven fabric.

A support in the form of an undulated table is proposed to support the pre-formed woven fabric in this particular configuration during handling storage and transportation. The undulated table is also configured for supporting the woven fabric as it is laid up so that the fibres therein are correctly aligned with respect to one another.

Typically, between 10 and 20 woven carbon fabric layers are used to form one shaped conical shell composite segment. However, depending on the strength requirements of the shaped conical shell composite segment, more or fewer woven carbon fabric layers may be required. The number of woven fabric layers are laid up on the undulated table for handling as well as during both storage and transportation.

Clamping members may be used to hold stacked pre-formed woven fabric layers in place on the undulated table. In this case, the undulated table may have portions adapted to engage with the clamping members.

The clamping members may be configured to be released from the undulated table but remain attached to the stack of pre-formed woven fabric layers to maintain alignment thereof, and, may be transferred with the woven carbon fabric layers to the mould. The clamping members may form part of the mould where a mould surface has one or more grooves formed therein into which the clamping members are placed for alignment of the stack of woven fabric layers within the mould prior to moulding.

Changes in the diameter of the conical shell composite component or segment will result in a change in the amplitude of undulations in the woven carbon woven fabric. As such, different undulated tables may be required for each diameter of the shaped conical shell composite component or segment.

An adjustable undulated table may be implemented in which the amplitude of each of its peaks can be adjusted according to the diameter of the shaped half-shell composite component.

The term "half-shell" as used herein refers to a component which when joined with another identical component forms a shell. Such a shell may have any suitable cross-section, for example, having a varying diameter in the direction parallel to the longitudinal axis. Such a shell need not be a regular shape and may vary in diameter around its periphery. The final composite component may have a circular cross-section, for example, but an ovoid cross-section is also possible.

The term "fibre" as used herein refers to an element, such as a thread or filament, which is woven to form a woven carbon fabric. More than one thread or filament may be used for each fibre. The fibre may comprise a warp component and/or a weft component of the woven fabric.

The term "amplitude" as used herein refers to the height of each peak formed in an upper or first surface of an undulated table. Each peak may be considered to have an amplitude profile which may vary across its length from one longitudinally extending edge of the table to the other. The amplitude profile may be the same for each peak forming surface of the undulated table or may be different from peak to peak.

The term "pitch" as used herein refers to the spacing between adjacent peaks of the upper surface of the undulated table. For any undulated table, the pitch may be fixed in accordance with the longitudinally extending edge of the table. In other embodiments, the pitch may vary in accordance with the longitudinally extending edge of the table.

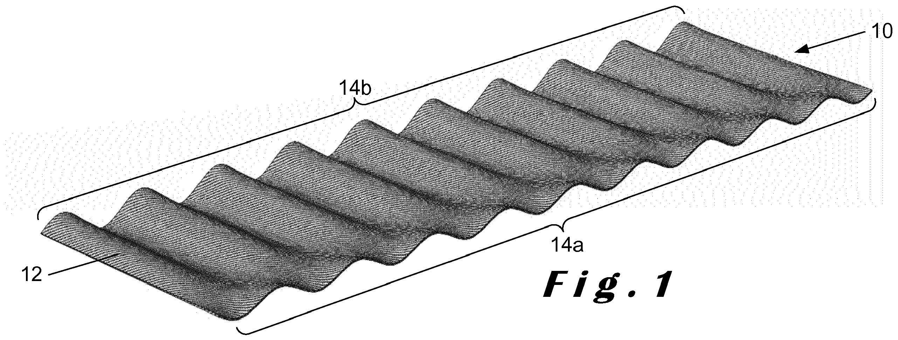

Figure 1 is a schematic perspective view of a woven carbon fabric layer 10 having undulations 12 formed therethrough. Although only an upper or first surface can be seen, a lower or second surface is complementary to the upper or first surface. The woven carbon fabric layer 10 is shown as having a substantially rectangular shape with longitudinally extending edges and transversely extending edges. The undulations 12 extend from a first longitudinal edge 14a to a second longitudinal edge 14b of the woven fabric 10. The undulations 12 have a first configuration at the first edge 14a and a second configuration at the second edge 14b, the first and second configurations having different amplitudes and/or pitches between adjacent undulations. Transversely extending edges 16a, 16b extend substantially perpendicularly to the longitudinally extending edges 14a, 14b.

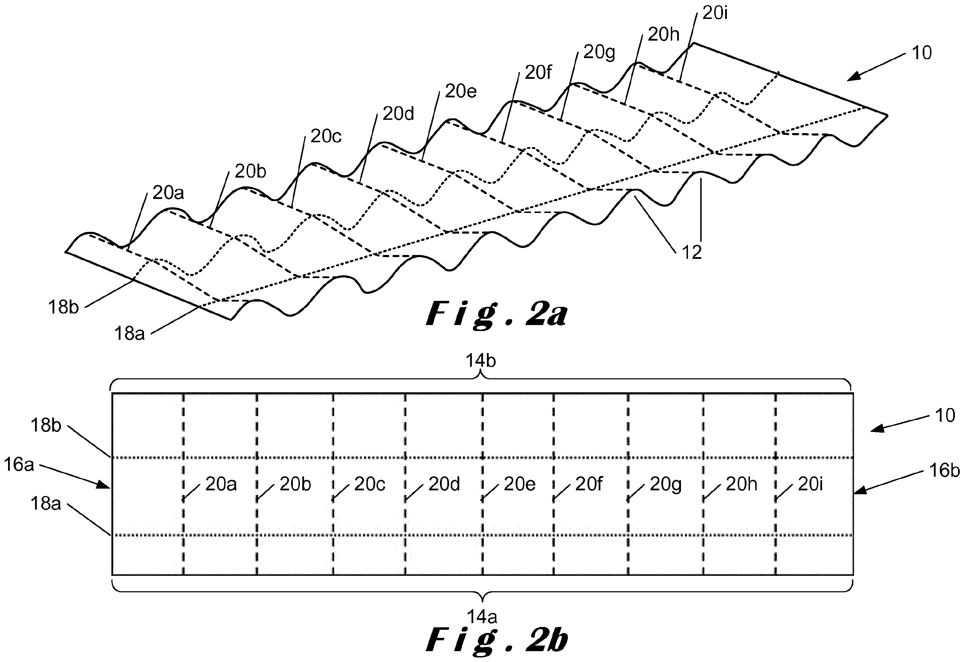

Figures 2a and 2b illustrate the woven carbon fabric 10 of Figure 1 in more detail. In particular, the woven carbon fabric 10 comprises longitudinally extending fibres or warp components 18a, 18b (referred to generally as warp components 18) with transverse extending fibres or weft components 20a, 20b, 20c, 20d, 20e, 20f, 20g, 20h, 20i (referred to generally as weft components 20). The weft components 20 must be maintained at 90° to the warp components 18 in the pre-formed woven fabric layer which is used to form the half-shell as described above. As shown in Figure 2a, the orientation of the warp and weft components with respect to one another is maintained in the undulations 12 (only two such undulations labelled for clarity).

Although particular warp and weft components have been labelled in Figures 2a and 2b for clarity, it is to be appreciated that there may be many more such components within the woven carbon fabric layer 10.

Although orientations of 0º and 90º are described, it will be appreciated that other angles are also possible, for example, 45º and 45º, 30º and 30º, and, 60º and 60º, these angles being relative to the longitudinal or transverse direction of the woven fabric layer 10 and are not limiting.

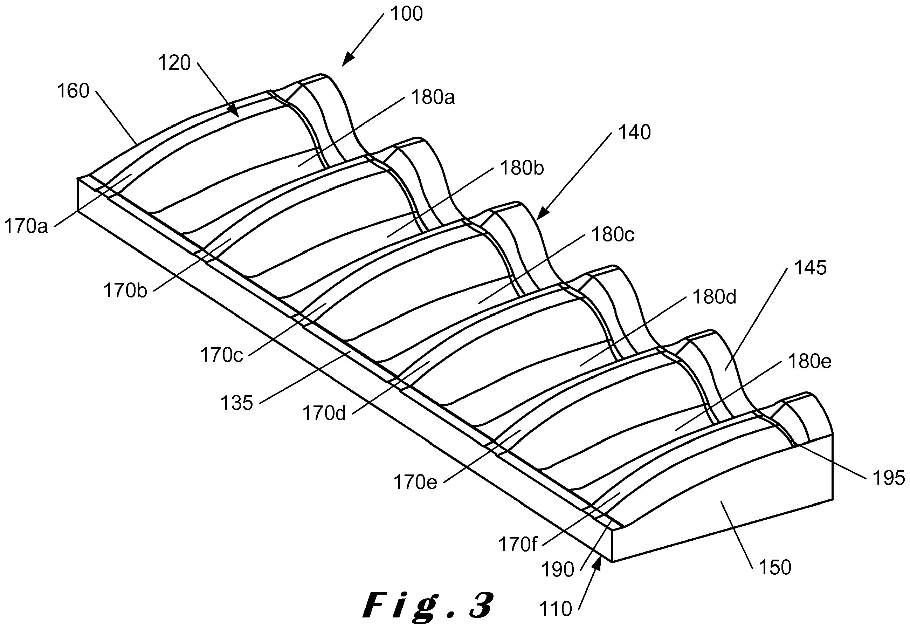

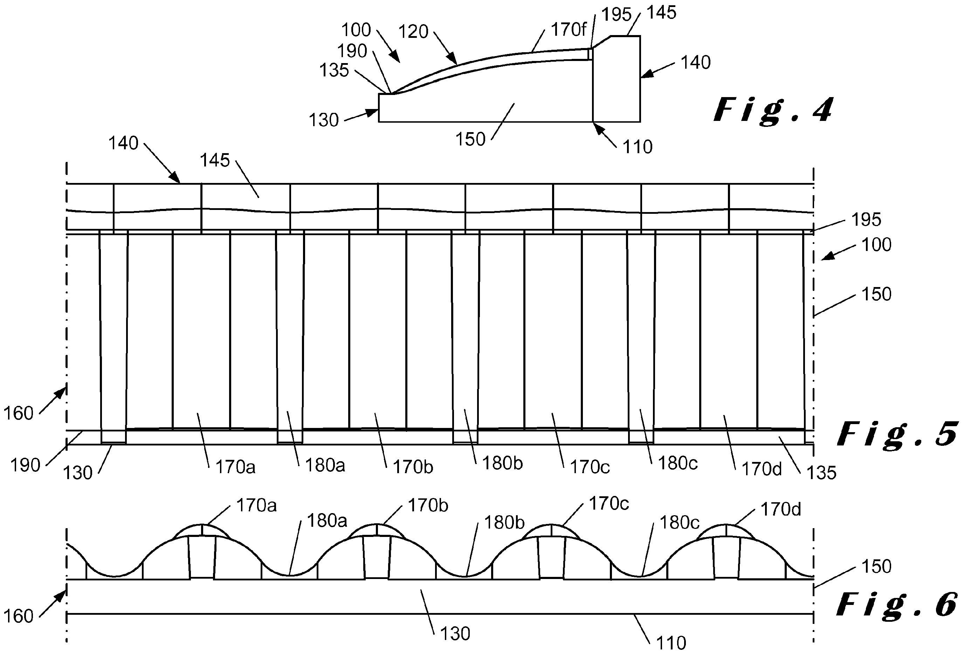

Turning now to Figures 3 to 6, a portion of a solid undulated table 100 is shown which comprises a base portion 110, a shaped surface 120 above the base portion, first and second longitudinal walls 130, 140 extending along the length of the table, and, first and second transverse walls 150, 160 extending transversely to the first and second longitudinal walls 130, 140. The first and second longitudinal walls 130, 140 define longitudinally extending edges, and, the first and second transverse walls 150, 160 define transversely extending edges which are substantially perpendicular to the longitudinally extending edges. For ease of explanation, it is assumed that the portion of the undulated table 100 comprises an entire table having first and second longitudinal walls and first and second transverse walls.

The shaped surface 120 comprises a plurality of peaks 170a, 170b, 170c, 170d, 170e, 170f (referred to generally as peaks 170) with a plurality of troughs 180a, 180b, 180c, 180d, 180e (referred to generally as troughs 180) on either side of each peak 170 which together form a continuous undulating shape for the surface 120. Although only 6 peaks 170 are shown with 5 troughs 180, it will readily be appreciated that there may be more or fewer peaks and troughs according to the dimensions of the woven carbon woven fabric 10 used for the shaped half-shell composite component. However, it may be the case that the transverse walls terminate with either a peak, or a portion thereof, or a trough, or a portion thereof, and, the numbers of peaks and troughs may be different to that described above.

Each peak 170 has a profile of varying amplitude in a transverse direction between the first and second longitudinal walls 130, 140 which matches respective ones of the undulations 12 of the woven carbon woven fabric as shown in Figure 1 with a first amplitude adjacent the first longitudinal wall 130 configured to match the first configuration of the woven fabric 10 at first edge 14a, and, a second amplitude adjacent the second longitudinal wall 140 configured to match the second configuration of the woven fabric 10 as second edge 14b.

The peaks 170 have a first predetermined spacing or pitch measured from the highest point on each peak in a longitudinal direction of the undulated table 100. Similarly, the troughs 180 have a second predetermined spacing or pitch measured from the lowest point of each trough in the longitudinal direction of the undulated table 100. In an example, the first and second predetermined spacings or pitches are equal.

Although the undulated table 100 is shown having peaks 170 and troughs 180 having predetermined spacings or pitches in the longitudinal direction thereof, the pitch between the peaks 170 and troughs 180 may vary in the longitudinal direction along the length of the undulated table 100. Naturally, as described above, the shape of the undulated table 100, and therefore, the spacing or pitch between the peaks and troughs, is determined by the shape of the pre-formed woven fabric layer 10.

Each longitudinal wall 130, 140 may have a retaining portion 135, 145 which assists with the alignment of the woven fabric 10 when placed on the undulated table 100. The provision of the retaining portions 135, 145 is especially useful where a stack of woven fabric layers are to be supported by the undulated table 100. The retaining portions 135, 145 define respective cutting zones 190, 195 where the longitudinal edges 14a, 14b of the woven fabric 10 can be trimmed to the correct size prior to loading into a mould.

The provision of such cutting zones, that is, a groove running along each of the longitudinally extending edges 130, 140 in or adjacent the retaining portions 135, 145, enables a blade to cut through each pre-formed woven fabric layer or a stack of such layers to size without damaging the undulating continuous surface 120 of the table 100.

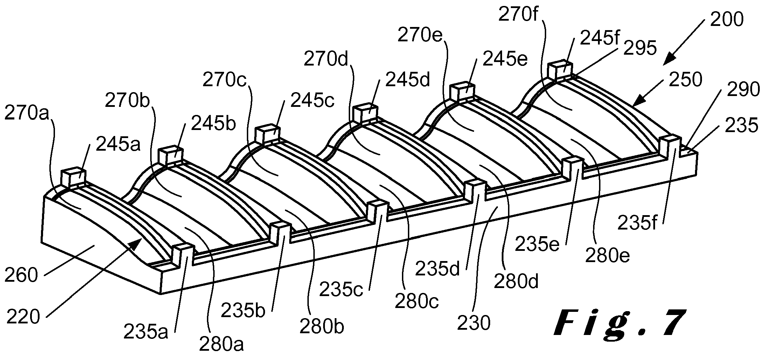

Figure 7 illustrates a portion of a second embodiment of a solid undulated table 200 in accordance with the present invention. The table comprises a base portion 210, a shaped surface 220 above the base portion, first and second longitudinal walls 230, 240 extending along the length of the table, and, first and second transverse walls 250, 260 extending transversely to the first and second longitudinal walls 230, 240. As before, the first and second longitudinal walls 230, 240 define longitudinally extending edges, and, the first and second transverse walls 250, 260 define transversely extending edges which are substantially perpendicular to the longitudinally extending edges.

As described above with reference to Figures 3 to 6, it is assumed that the portion of the undulated table 200 comprises an entire table.

The shaped surface 220 comprises a plurality of peaks 270a, 270b, 270c, 270d, 270e, 270f (referred to generally as peaks 270) with a plurality of troughs 280a, 280b, 280c, 280d, 280e (referred to generally as troughs 280) on either side of each peak 270 which together form a continuous undulating shape for the surface 220. Although only 6 peaks 270 are shown with 5 troughs 280, it will readily be appreciated that there may be more or fewer peaks and troughs according to the dimensions of the woven carbon woven fabric 10 used for the conical half-shell composite component. As described above, the transverse walls may terminate with either a peak, or a portion thereof, or a trough, or a portion thereof, and, the numbers of peaks and troughs may be different to that described above.

Each peak 270 has a profile of varying amplitude in a transversely extending direction between the first and second longitudinal walls or first and second longitudinally extending edges 230, 240 which matches respective ones of the undulations 12 of the woven carbon woven fabric as shown in Figure 1 with a first amplitude adjacent the first longitudinal wall or longitudinally extending edge 230 configured to match the first configuration of the woven fabric 10 at first edge 14a, and, a second amplitude adjacent the second longitudinal wall or longitudinally extending edge 240 configured to match the second configuration of the woven fabric 10 as second edge 14b.

The peaks 270 have a first predetermined spacing or pitch measured from the highest point on each peak in a longitudinally extending direction of the undulated table 200. Similarly, the troughs 280 have a second predetermined spacing or pitch measured from the lowest point of each trough in the longitudinally extending direction of the undulated table 200. In an example, the first and second predetermined spacings or pitches are equal.

Although the undulated table 200 is shown having peaks 270 and troughs 280 having predetermined spacings or pitches in the longitudinal direction thereof, the pitch between the peaks 270 and troughs 280 may vary in the longitudinally extending direction along the length of the undulated table 200. Naturally, as described above, the shape of the undulated table 200, and therefore, the spacing or pitch between the peaks and troughs, is determined by the shape of the pre-formed woven fabric layer 10.

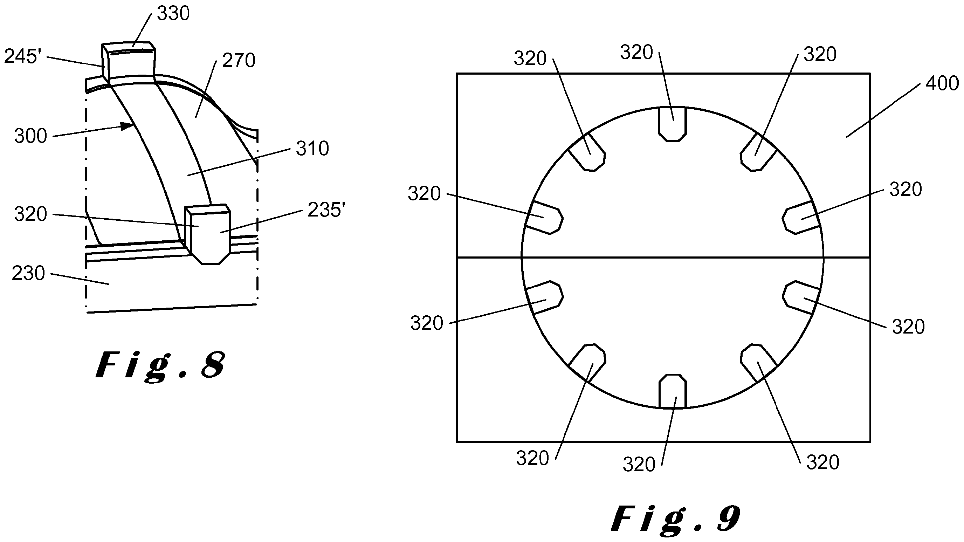

Longitudinal wall or longitudinally extending edge 230 may have a retaining portion 235 which assists with the alignment of the woven fabric 10 when placed on the undulated table 200. Mounting elements 235a, 235b, 235c, 235d, 235e, 235f (generally referred to as mounting elements 235') are provided in or on the retaining portion 235 and are configured to engage with a clamping member 300 as will be described in more detail below with respect to Figure 8. The retaining portion 235 defines a cutting zone 290 in a similar way to retaining portion 135 and cutting zone 190 of Figure 3.

Longitudinal wall or longitudinally extenind edge 240 may have a retaining portion 245 which assists with the alignment of the woven fabric 10 when placed on the undulated table 200. The retaining portion 245 defines a cutting zone 295 in a similar way to retaining portion 145 and cutting zone 195 of Figure 3.

Instead of having a retaining portion adjacent longitudinal wall 240 (as described above with reference to Figures 3 to 6), a plurality of mounting elements 245a, 245b, 245c, 245d, 245e, 245f (generally referred to as mounting elements 245') are provided adjacent the longitudinal wall or longitudinally extending edge 240 at one end of the peaks 270. The mounting elements 245' are configured to engage with the clamping member 300 as described below.

In another example (not shown), a retaining portion may be provided adjacent longitudinal wall 240 which extends to form the mounting elements 245'. In this non-illustrated example, the cutting zone 295 may be provided adjacent the mounting elements 245' or in any other suitable position with respect to the peaks and troughs forming the continuous undulating shape for the surface 220.

Figure 8 illustrates a clamping member 300 for use with the undulated table 200 described with respect to Figure 7. Components previously described with reference to Figure 7 bear the same reference numerals. The clamping member 300 comprises a central portion 310, configured to match the peak profile of each of the peaks 270, and first and second clip portions 320, 330 configured to engage with respective ones of mounting elements 235', 245' to hold the clamping member 300 in place over layers of the woven fabric (not shown) laid on the undulated table 200 for handling.

The clamping members 300 are sized to match the peak profile of each peak 270 with the centre-line thereof being configured to be aligned with the top of the peak. The shape of the clamping member 300 is identical to the shape of the mould into which the stack of woven fabric layers are to be placed for forming the composite component. As described above, the mould surface may have one or more grooves into which the clamping members are placed for alignment of the stack of woven fabric layers within the mould prior to moulding. In addition, the grooves may be shaped to accommodate the first and second clip portions 320, 330 when removed from the mounting elements 235', 245' of the undulated table 200.

The central portion 310 of each clamping member 300 may comprise a band, plate or wire of a predetermined width depending on the peak profile or shape of the peak 270 to which the clamping member 300 is to be attached.

Although not shown, clamping members may be provided for one or more peaks 270. Similarly, different clamping members may also be provided for one or more of the troughs 280 between the peaks 270 with corresponding mounting elements (not shown) provided on the undulated table 200.

Mounting elements 235', 245' may take any suitable form which is capable of engaging with clip portions of the clamping members 300.

Figure 9 illustrates part of a mould 400 into which stack of pre-formed woven fabric layers are to be placed for the formation of the final composite component in the moulding process. Portions are provided in the mould 400 for receiving the clips 320, 330 but only clips 320 can be seen in Figure 9.

As described above, an adjustable undulated table may be provided in which the amplitude of the peaks can be adjusted to accommodate different woven carbon woven fabric layers for use in shaped composite components having different diameters. The amplitude may be adjusted by raising the height of the peaks and/or by lowering the depth of the troughs. The same clamping members may be used as the profile of the top surface of the peak remains substantially the same. If the profile of the peak changes, different clamping members are to be used.

In other examples, the clamping members may be configured to engage with the base portion and therefore mounting members may not be needed in the shaped surface or portion.

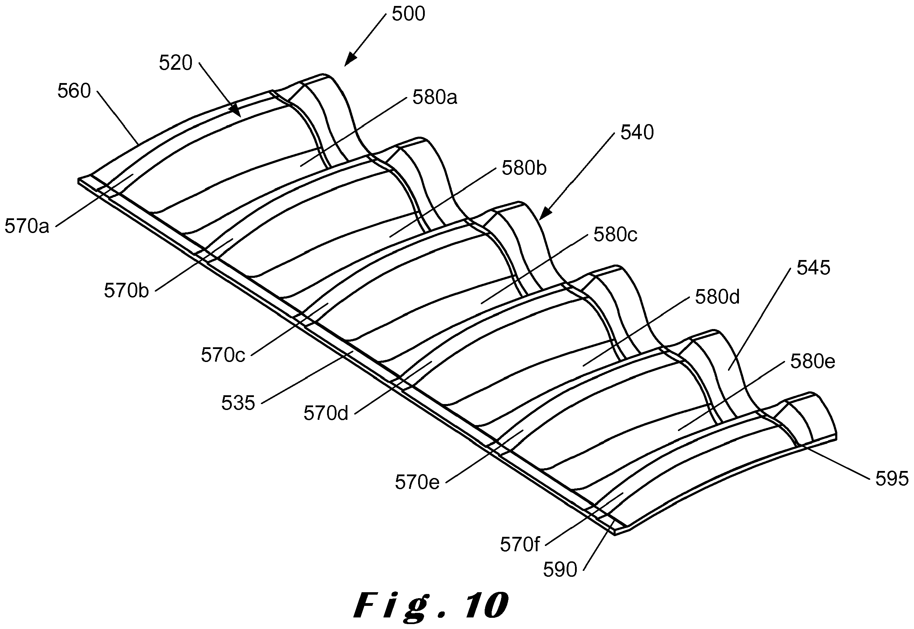

Figure 10 illustrates another example of an undulated table 500 in accordance with the present invention. The undulated table 500 is similar to that shown in Figure 7, but, in this example, the table 500 is defined by a frame over which the pre-formed woven fabric layers are laid. The frame may comprise a wire framework which has a first or upper surface over which the pre-formed woven fabric layers are laid and a second or lower surface which is complementary to the first or upper surface. The first or upper surface of the wire framework may be covered with a layer of material to provide a continuous undulating surface 520. However, the wire framework itself may be configured to form the continuous undulating surface.

The table 500 comprises a shaped surface 520 having first and second longitudinally extending edges 530, 540, and, first and second transversely extending edges 550, 560 which are substantially perpendicular to the longitudinally extending edges 530, 540. The shaped surface 520 comprises a plurality of peaks 570a, 570b, 570c, 570d, 570e, 570f (referred to generally as peaks 570) with a plurality of troughs 580a, 580b, 580c, 580d, 580e (referred to generally as troughs 580) on either side of each peak 570 which together form a continuous undulating shape for the surface 520. Although only 6 peaks 570 are shown with 5 troughs 580, it will readily be appreciated that there may be more or fewer peaks and troughs according to the dimensions of the woven carbon woven fabric 10 used for the conical composite component. The transversely extending edges may terminate with either a peak, or a portion thereof, or a trough, or a portion thereof, and, the numbers of peaks and troughs may be different to that described above.

Each peak 570 has a peak profile of varying amplitude in a transverse direction between the first and second longitudinal edges 530, 540 which matches respective ones of the undulations 12 of the woven carbon woven fabric as shown in Figure 1 with a first amplitude adjacent the first longitudinally extending edge 530 configured to match the first configuration of the woven fabric 10 at first edge 14a, and, a second amplitude adjacent the second longitudinally extending edge 540 configured to match the second configuration of the woven fabric 10 as second edge 14b.

The peaks 570 have a first predetermined spacing or pitch measured from the highest point on each peak in a longitudinally extending direction of the undulated table 500. Similarly, the troughs 580 have a second predetermined spacing or pitch measured from the lowest point of each trough in the longitudinal direction of the undulated table 500. In an example, the first and second predetermined spacings or pitches are equal.

Although the undulated table 500 is shown having peaks 570 and troughs 580 having predetermined spacings or pitches in the longitudinal direction thereof, the pitch between the peaks 570 and troughs 580 may vary in the longitudinal direction along the length of the undulated table 500. Naturally, as described above, the shape of the undulated table 500, and therefore, the spacing or pitch between the peaks and troughs, is determined by the shape of the pre-formed woven fabric layer 10.

Longitudinally extending edges 530, 540 may have respective retaining portions 535, 545 which assist with the alignment of the woven fabric 10 when placed on the undulated table 500. Cutting zones 590, 595 may be provided in the retaining portions 535, 545 to allow for the trimming of the pre-formed woven fabric layers 10.

Mounting elements as shown in Figures 7 and 8 may provided in or on the retaining portions 535, 545 which are configured to engage with a clamping member 300 as will be described with respect to Figure 8 above.

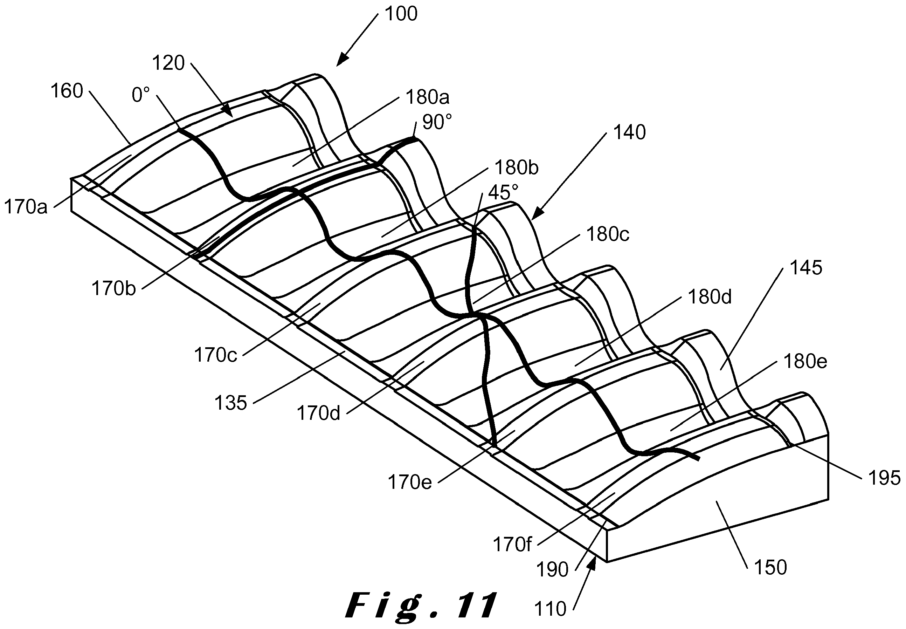

Figure 11 is similar to Figure 3 but illustrates the alignment of fibres within a pre-formed woven fabric layer 10 with respect to the surface 120. As shown, the longitudinally extending fibres are indicated as being at 0º and the transversely extending fibres are indicated as being at 90º. However, it will readily be appreciated that other orientations of the fibres are also possible, for example, 30º, 45º and 60º, with a fibre extending at 45º to the longitudinally extending fibre (at 0º) being shown.

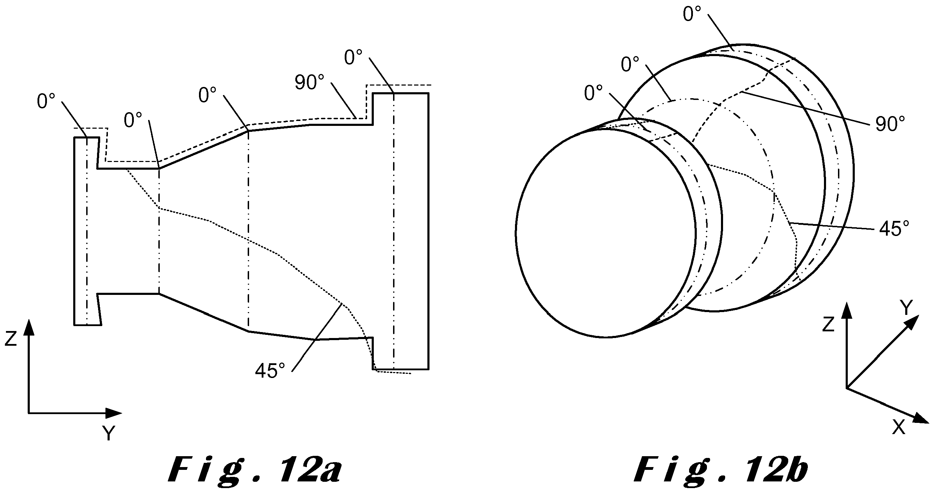

Figures 12a and 12b illustrate respective side view and perspective views of a component. Orientations of fibres at 0º, 45º and 90º are shown by way of example as it will be appreciated that there will be more fibres than those illustrated. After moulding, the final component has the desired shape with the pre-formed woven fabric layers encased therein.

Although the undulated tables described with reference to Figures 3 to 7 and 10 refer to use with pre-formed woven fabric layers, it is possible to use these tables for fibre laying to form pre-formed non-woven fibre layers. Pre-formed non-woven fibre layers can also be skewed within a stack formed on the tables to provide different orientation of the fibres within the stack. Figure 11 illustrates a fibre orientation of 45º which may be formed by laying the fibres at that angle or by orienting a pre-formed non-woven fibre layer at that angle.

In accordance with the present invention, use of the undulated table provides the ability to stack pre-formed woven fabric layers ready for transfer to a mould. The stacked pre-formed woven fabric layers are clamped in position on the shaped surface of the undulated table by clamping members so that the orientation of the fibres in each layer is maintained. The clamped stack of woven fabric layers can then be transferred to the mould and deformed to fit the mould shape where necessary. This means that the pre-formed woven fabric layers do not retain their undulating profile as described with reference to Figures 1, 2a and 2b above in the final composite component.

Additionally, the use of the undulated table in accordance with the present invention allows for the stacking of non-woven fibre layers in predetermined orientations which can then be transferred to a mould. A method for forming pre-formed non-woven fibre layers can be implemented by forming a first non-woven fibre layer comprising a plurality of fibres extending therethrough, forming a second non-woven fibre layer also comprising a plurality of fibres over the first non-woven fibre layer and so on. Fibres in each non-woven fibre layer are oriented to be at an angle with respect to the undulated table or support on which the stack is formed. As shown in Figure 11 and as described above, the fibres may be aligned, for example, at 0º, 45º and 90º. However, fibre orientation at other angles is also possible.

The plurality of fibres in each non-woven fibre layer may be oriented to be at the same angle with respect to the undulated table or at least some of the fibres may be oriented at different angles. Subsequent non-woven fibre layers can be oriented at the same angle as one of the layers below it in the stack or may be oriented to be at a different angle.

Laying up fibres on the undulated table in accordance with the present invention to form non-woven fibre layers enables a stack of non-woven fibre layers to be pre-formed ready for placing in a mould. In this way, the undulated table of the present invention is not limited to use with maintaining the shape and form of pre-formed woven fabric layers but also pre-formed non-woven fibre layers.

Although the undulated table of the present invention has been described with reference specific embodiments, it will be appreciated that other embodiments of the undulated table are possible which fall within the scope of the claims.

## Claims

1. A support (100; 200; 500) for at least one pre-formed fabric layer which fabric layer is configured for use in the formation of a composite component, wherein the support is configured for handling a plurality of pre-formed woven fabric layers (10) or wherein the support is configured for forming pre-formed non-woven fibre layers, wherein the support is configured to align longitudinally extending fibres (18a, 18b) and transversely extending fibres (20a, 20b, 20c, 20d, 20e, 20f, 20g, 20h, 20i) of each pre-formed fabric layer in a predetermined orientation by providing a shaped portion (120; 220; 520) configured to match the configuration of the at least one pre-formed fabric layer the shaped portion having first and second longitudinally extending edges (130, 140; 230, 240; 530, 540) and first and second transversely extending edges (150, 160; 250, 260; 550, 560) configured to be substantially perpendicular to the first and second longitudinally extending edges,
wherein the shaped portion (120; 220; 520) comprises a plurality of peaks (170a, 170b, 170c, 170d, 170e, 170f; 270a, 270b, 270c, 270d, 270e, 270f; 570a, 570b, 570c, 570d, 570e, 570f) extending between the first and second longitudinal edges (130, 140; 230, 240; 530, 540), and wherein each of the plurality of peaks (170a, 170b, 170c, 170d, 170e, 170f; 270a, 270b, 270c, 270d, 270e, 270f; 570a, 570b, 570c, 570d, 570e, 570f) has a peak profile comprising a varying amplitude which extends between the first and second longitudinal edges (130, 140; 230, 240; 530, 540).

2. The support according to the preceding claim, wherein each peak (170a, 170b, 170c, 170d, 170e, 170f; 270a, 270b, 270c, 270d, 270e, 270f; 570a, 570b, 570c, 570d, 570e, 570f) has the same peak profile.

3. The support according to any one of the preceding claims , wherein the support comprises at least one retaining portion configured for aligning at least one woven fabric layer with respect to the shaped portion and wherein the support further comprises a clamping member (300) configured to be aligned with the peak profile of each peak (270a, 270b, 270c, 270d, 270e, 270f) and to be attached to the shaped surface (220) by means of attachment portions included in the clamping member (300), the attachment portions (320, 330) being configured to engage with respective portions of each retaining portion (235a, 235b, 235c, 235d, 235e, 235f, 245a, 245b, 245c, 245d, 245e, 245f).

4. The support according to the preceding claim, wherein the clamping member (300) further comprises a central portion (310) connecting the attachment portions (320, 330) to one another.

5. The support according to the preceding claim, wherein the central portion (310) is configured to match substantially the peak profile of a peak (270a, 270b, 270c, 270d, 270e, 270f) over which the clamping member (300) is to be positioned.

6. The support according to any one of claims 3 to 5, wherein the clamping member (300, 310, 320, 330) is configured for being located in a mould (400) to support the at least one pre-formed fabric layer therein.

7. The support according to any one of claims 3 to 6, wherein each retaining portion (235a, 235b, 235c, 235d, 235e, 235f, 245a, 245b, 245c, 245d, 245e, 245f) comprises a plurality of mounting elements aligned with each peak (270a, 270b, 270c, 270d, 270e, 270f), the attachment portions (320, 330) being configured to be removably attached to the mounting elements.

8. A method of handling a plurality of pre-formed woven fabric layers (10) for use in the formation of a composite component, the method comprising:-
stacking each pre-formed woven fabric layer (10) on the support (100; 200; 500) according to claim 1; and
storing the stacked pre-formed woven fabric layers (10) on the support (100; 200; 500).

9. The method according to the preceding claim further comprising the step of transporting the stacked pre-formed woven fabric layers (10) on the support (100; 200; 500).

10. A method of making a non-woven pre-form for use in the formation of a composite component using the support (100; 200; 500) according to claim 1, the method comprising:
a) laying a first plurality of fibres on a support to form a first non-woven fibre layer;
b) laying a second plurality of fibres on a support over the first non-woven fibre layer to form a second non-woven fibre layer; and
c) repeating step b) to form at least one further non-woven fibre layer on the support over a previously formed non-woven fibre layer;
wherein each fibre is laid at an angle with respect to the support.

11. A method according to the preceding claim , wherein fibres in each non-woven fibre layer are configured to be oriented at the same angle with respect to the support.

12. A method according to claim 10, wherein fibres in each non-woven fibre layer are configured to be oriented at different angles with respect to the support.

## Patentansprüche

1. Träger (100; 200; 500) für mindestens eine vorgeformte Stoffschicht, wobei die Stoffschicht zur Verwendung bei der Bildung einer Verbundkomponente konfiguriert ist, wobei der Träger zur Handhabung einer Vielzahl von vorgeformten Gewebestoffschichten (10) konfiguriert ist oder wobei der Träger zum Bilden vorgeformter Faservliesschichten konfiguriert ist, wobei der Träger konfiguriert ist, um sich in Längsrichtung erstreckende Fasern (18a, 18b) und sich in Querrichtung erstreckende Fasern (20a, 20b, 20c, 20d, 20e, 20f, 20g, 20h, 20i) jeder vorgeformten Stoffschicht in einer vorbestimmten Ausrichtung auszurichten, indem er einen geformten Abschnitt (120; 220; 520) bereitstellt, der konfiguriert ist, um mit der Konfiguration der mindestens einen vorgeformten Stoffschicht übereinzustimmen, wobei der geformte Abschnitt erste und zweite sich in Längsrichtung erstreckende Kanten (130, 140; 230, 240; 530, 540) und erste und zweite sich in Querrichtung erstreckende Kanten (150, 160; 250, 260; 550, 560) aufweist, die konfiguriert sind, um im Wesentlichen senkrecht zu den ersten und zweiten sich in Längsrichtung erstreckenden Kanten zu sein,
wobei der geformte Abschnitt (120; 220; 520) eine Vielzahl von Spitzen (170a, 170b, 170c, 170d, 170e, 170f; 270a, 270b, 270c, 270d, 270e, 270f; 570a, 570b, 570c, 570d, 570e, 570f) umfasst, die sich zwischen den ersten und zweiten Längskanten (130, 140; 230, 240; 530, 540) erstrecken, und wobei jede der Vielzahl von Spitzen (170a, 170b, 170c, 170d, 170e, 170f; 270a, 270b, 270c, 270d, 270e, 270f; 570a, 570b, 570c, 570d, 570e, 570f) ein Spitzenprofil aufweist, das eine variierende Amplitude umfasst, die sich zwischen den ersten und der zweiten Längskanten (130, 140; 230, 240; 530, 540) erstreckt.

2. Träger nach dem vorstehenden Anspruch, wobei jede Spitze (170a, 170b, 170c, 170d, 170e, 170f; 270a, 270b, 270c, 270d, 270e, 270f; 570a, 570b, 570c, 570d, 570e, 570f) das gleiche Spitzenprofil aufweist.

3. Träger nach irgendeinem der vorstehenden Ansprüche, wobei der Träger mindestens einen Halteabschnitt umfasst, der zum Ausrichten mindestens einer Gewebestoffschicht in Bezug auf den geformten Abschnitt konfiguriert ist, und wobei der Träger ferner ein Klemmorgan (300) umfasst, das konfiguriert ist, um zum Spitzenprofil jeder Spitze (270a, 270b, 270c, 270d, 270e, 270f) ausgerichtet zu werden und mittels Befestigungsabschnitten, die im Klemmorgan (300) inbegriffen sind, an der geformten Oberfläche (220) befestigt zu werden, wobei die Befestigungsabschnitte (320, 330) konfiguriert sind, um in jeweilige Abschnitte jedes Halteabschnitts (235a, 235b, 235c, 235d, 235e, 235f, 245a, 245b, 245c, 245d, 245e, 245f) einzugreifen.

4. Träger nach dem vorstehenden Anspruch, wobei das Klemmorgan (300) ferner einen mittleren Abschnitt (310) umfasst, der die Befestigungsabschnitte (320, 330) miteinander verbindet.

5. Träger nach dem vorstehenden Anspruch, wobei der mittlere Abschnitt (310) konfiguriert ist, um im Wesentlichen mit dem Spitzenprofil einer Spitze (270a, 270b, 270c, 270d, 270e, 270f) übereinzustimmen, über der das Klemmorgan (300) zu positionieren ist.

6. Träger nach irgendeinem der Ansprüche 3 bis 5, wobei das Klemmorgan (300, 310, 320, 330) konfiguriert ist, um sich in einer Form (400) zu befinden, um die mindestens eine vorgeformte Stoffschicht darin zu tragen.

7. Träger nach irgendeinem der Ansprüche 3 bis 6, wobei jeder Halteabschnitt (235a, 235b, 235c, 235d, 235e, 235f, 245a, 245b, 245c, 245d, 245e, 245f) eine Vielzahl von zu jeder Spitze (270a, 270b, 270c, 270d, 270e, 270f) ausgerichteten Montageelementen umfasst, wobei die Befestigungsabschnitte (320, 330) konfiguriert sind, um abnehmbar an den Montageelementen befestigt zu werden.

8. Verfahren zur Handhabung einer Vielzahl von vorgeformten Gewebestoffschichten (10) zur Verwendung bei der Bildung einer Verbundkomponente, wobei das Verfahren umfasst:
Stapeln jeder vorgeformten Gewebestoffschicht (10) auf dem Träger (100; 200; 500) nach Anspruch 1; und
Lagern der gestapelten vorgeformten Gewebestoffschichten (10) auf dem Träger (100; 200; 500).

9. Verfahren nach dem vorstehenden Anspruch, das ferner den Schritt des Transportierens der gestapelten vorgeformten Gewebestoffschichten (10) auf dem Träger (100; 200; 500) umfasst.

10. Verfahren zur Herstellung einer Vlies-Vorform zur Verwendung bei der Bildung einer Verbundkomponente unter Verwendung des Trägers (100; 200; 500) nach Anspruch 1, wobei das Verfahren umfasst:
a) Legen einer ersten Vielzahl von Fasern auf einen Träger, um eine erste Faservliesschicht zu bilden;
b) Legen einer zweiten Vielzahl von Fasern auf einen Träger über der ersten Faservliesschicht, um eine zweite Faservliesschicht zu bilden; und
c) Wiederholen von Schritt b), um mindestens eine weitere Faservliesschicht auf dem Träger über einer zuvor gebildeten Faservliesschicht zu bilden;
wobei jede Faser in einem Winkel in Bezug auf den Träger gelegt wird.

11. Verfahren nach dem vorstehenden Anspruch, wobei Fasern in jeder Faservliesschicht konfiguriert sind, um im gleichen Winkel in Bezug auf den Träger orientiert zu sein.

12. Verfahren nach Anspruch 10, wobei Fasern in jeder Faservliesschicht konfiguriert sind, um in unterschiedlichen Winkeln in Bezug auf den Träger orientiert zu sein.

## Revendications

1. Support (100 ; 200 ; 500) pour au moins une couche de tissu préformée, laquelle couche de tissu est configurée pour être utilisée dans la formation d'un composant composite, dans lequel le support est configuré pour manipuler une pluralité de couches de tissu textile préformées (10) ou dans lequel le support est configuré pour former des couches de fibres non tissées préformées, dans lequel le support est configuré pour aligner les fibres s'étendant longitudinalement (18a, 18b) et les fibres s'étendant transversalement (20a, 20b, 20c, 20d, 20e, 20f, 20g, 20h, 20i) de chaque couche de tissu préformé dans une orientation prédéterminée en fournissant une partie façonnée (120 ; 220 ; 520) configurée pour correspondre à la configuration de ladite au moins une couche de tissu préformée, la partie façonnée ayant des premier et second bords s'étendant longitudinalement (130, 140 ; 230, 240 ; 530, 540) et des premier et second bords s'étendant transversalement (150, 160 ; 250, 260 ; 550, 560) configurés pour être sensiblement perpendiculaire aux premier et second bords s'étendant longitudinalement,
dans lequel la partie façonnée (120 ; 220 ; 520) comprend une pluralité de pointes (170a, 170b, 170c, 170d, 170e, 170f ; 270a, 270b, 270c, 270d, 270e, 270f ; 570a, 570b, 570c, 570d, 570e, 570f) s'étendant entre les premier et second bords longitudinaux (130, 140 ; 230, 240 ; 530, 540), et dans lequel chaque pointe de la pluralité de pointes (170a, 170b, 170c, 170d, 170e, 170f ; 270a, 270b, 270c, 270d, 270e, 270f ; 570a, 570b, 570c, 570d, 570e, 570f) a un profil de pointe comprenant une amplitude variable qui s'étend entre les premier et second bords longitudinaux (130, 140 ; 230, 240 ; 530, 540).

2. Support selon la revendication précédente, dans lequel chaque pointe (170a, 170b, 170c, 170d, 170e, 170f ; 270a, 270b, 270c, 270d, 270e, 270f ; 570a, 570b, 570c, 570d, 570e, 570f) a le même profil de pointe.

3. Support selon l'une quelconque des revendications précédentes, dans lequel le support comprend au moins une partie de retenue configurée pour aligner au moins une couche de tissu textile par rapport à la partie façonnée et dans lequel le support comprend en outre un élément de serrage (300) configuré pour être aligné avec le profil de pointe de chaque pointe (270a, 270b, 270c, 270d, 270e, 270f) et pour être fixé à la surface façonnée (220) au moyen de parties de fixation incluses dans l'élément de serrage (300), les parties de fixation (320, 330) étant configurées pour s'engager dans des parties respectives de chaque partie de retenue (235a, 235b, 235c, 235d, 235e, 235f, 245a, 245b, 245c, 245d, 245e, 245f).

4. Support selon la revendication précédente, dans lequel l'élément de serrage (300) comprend en outre une partie centrale (310) reliant les parties de fixation (320, 330) l'une à l'autre.

5. Support selon la revendication précédente, dans lequel la partie centrale (310) est configurée pour correspondre sensiblement au profil de pointe d'une pointe (270a, 270b, 270c, 270d, 270e, 270f) sur lequel l'élément de serrage (300) doit être positionné.

6. Support selon l'une quelconque des revendications 3 à 5, dans lequel l'élément de serrage (300, 310, 320, 330) est configuré pour être placé dans un moule (400) afin d'y supporter ledit au moins une couche de tissu préformée.

7. Support selon l'une quelconque des revendications 3 à 6, dans lequel chaque partie de retenue (235a, 235b, 235c, 235d, 235e, 235f, 245a, 245b, 245c, 245d, 245e, 245f) comprend une pluralité d'éléments de montage alignés avec chaque pointe (270a, 270b, 270c, 270d, 270e, 270f), les parties de fixation (320, 330) étant configurées pour être fixées de manière amovible aux éléments de montage.

8. Procédé de manipulation d'une pluralité de couches de tissu textile préformé (10) destinées à être utilisées dans la formation d'un composant composite, le procédé comprenant les étapes consistant à :
- empiler chaque couche de tissu textile préformé (10) sur le support (100 ; 200 ; 500) selon la revendication 1 ; et
stocker les couches de tissu textile préformé (10) empilées sur le support (100 ; 200 ; 500).

9. Procédé selon la revendication précédente comprenant en outre l'étape de transport des couches de tissu textile préformé empilées (10) sur le support (100 ; 200 ; 500).

10. Procédé de fabrication d'une préforme non tissée destinée à la formation d'un composant composite à l'aide du support (100 ; 200 ; 500) selon la revendication 1, le procédé comprenant les étapes consistant à :
a) déposer une première pluralité de fibres sur un support pour former une première couche de fibres non tissées ;
b) déposer une seconde pluralité de fibres sur un support par-dessus la première couche de fibres non tissées pour former une seconde couche de fibres non tissées ; et
c) répéter l'étape b) pour former au moins une autre couche de fibres non tissées sur le support au-dessus d'une couche de fibres non tissées précédemment formée ;
dans lequel chaque fibre est disposée selon un angle par rapport au support.

11. Procédé selon la revendication précédente, dans lequel les fibres de chaque couche de fibres non tissées sont configurées pour être orientées selon le même angle par rapport au support.

12. Procédé selon la revendication 10, dans lequel les fibres de chaque couche de fibres non tissées sont configurées pour être orientées selon des angles différents par rapport au support.
